# EUROPEAN PATENT APPLICATION

(11) **EP 3 771 775 A1**
(43) Date of publication of application: **03.02.2021**
(21) Application number: 19210278.8
(22) Date of filing: 20.11.2019
(51) Int. Cl.: E02F 3/30, E02F 3/96, E02F 9/20

(54) **MACHINE CONTROL SYSTEM FOR OPERATING A CONSTRUCTION MACHINE**

(30) Priority: 29.07.2019 WO PCT/CN2019/098138
(71) Applicant: Guangxi LiuGong Machinery Co., Ltd., Liuzhou Guangxi 545007 (CN)
(72) Inventor: Wagner, Edward, Liuzhou, Guangxi 545001 (CN)
(74) Representative: WBH Wachenhausen Patentanwälte PartG mbB

(57) **Abstract**

The invention relates to a machine control system (100) for operating a construction machine (1). The machine control system comprises a plurality of operating elements (110) for operating the construction machine in a loader mode and in at least one excavator mode. The machine control system further comprises a control device (120) that is configured to selectively set a loader control layout (L) or at least one excavator control layout (E1,E2) of the plurality of operating elements, wherein the loader control layout comprises an assignment of the plurality of operating elements with loader operating functions and the at least one excavator control layout comprises an assignment of the plurality of operating elements with excavator operating functions that is different to the assignment of the plurality of operating elements with the loader operating functions. The machine control system further comprises a switch (130) that is configured to communicate with the control device for selecting one of the loader control layout (L) and the at least one excavator control layout (E1,E2). The invention further relates to a construction machine that comprises such a machine control system.

## Description

### Technical field

The invention concerns a machine control system for operating a construction machine in a loader mode and in an excavator mode. The invention further concerns a construction machine that is configured to be operated in a loader mode and in an excavator mode. Such a construction machine may be defined as a combined loader-excavator-machine.

### Prior art

For providing the functionalities of a loader and an excavator on a single machine, multiple function construction machines with two separate booms, i.e. a loader boom at the front end of the machine with a loader bucket mounted thereto and an excavator boom at the rear end of the machine with an excavator bucket mounted thereto, are often used on construction sites. For changing the operational mode of such a construction machine, the machine operator needs to change his sitting position for changing his field of view and for aligning himself to an instrument panel of the loader boom and to an instrument panel of the excavator boom, respectively.

### Summary of the invention

The machine control system according to the present invention for operating a construction machine comprises a plurality of operating elements for operating the construction machine in a loader mode and in at least one excavator mode. The plurality of operating elements may thus be part of an operating system for operating the construction machine in the loader mode or in the at least one excavator mode. The plurality of operating elements may be arranged in an operator's cabin of the construction machine. The construction machine according to the present invention may comprise a chassis, a machine frame, which may be pivotably arranged on the chassis, and an articulated boom, which may be pivotably mounted to the machine frame. In the loader mode, the construction machine may be configured to perform conventional loader tasks. Optionally, the construction machine may be configured to perform conventional dozer tasks in the loader mode. In the at least one excavator mode, the construction machine may be configured to perform conventional excavator tasks. Optionally, the construction machine may be configured to perform conventional dozer tasks in the at least one excavator mode.

The plurality of operating elements may comprise at least one operating element for moving an articulated boom of the construction machine, at least one operating element for moving the machine frame and the chassis relatively to one another, and/or at least one operating element for moving the entire construction machine. Moving the articulated boom may comprise pivoting of at least one arm of the articulated boom. Moving the machine frame may comprise slewing of the machine frame together with the articulated boom with respect to the chassis. Moving the entire construction machine may comprise driving and/or steering of the entire construction machine. The plurality of operating elements may further comprise at least one operating element for operating a tool that is mounted on the articulated boom or on the chassis. One of these operating elements may also be configured for carrying out at least two of the tasks described.

The machine control system further comprises a control device that is configured to selectively set a loader control layout or at least one excavator control layout. The loader control layout comprises an assignment of the plurality of operating elements with loader operating functions and the at least one excavator control layout comprises an assignment of the plurality of operating elements with excavator operating functions that is different to the assignment of the plurality of operating elements with the loader operating functions. Different excavator control layouts, for example two excavator control layouts, may comprise assignments of the plurality of operating elements with excavator operating functions that are at least partially different from each other. The machine control system may comprise changeable control layouts for the plurality of operating elements for operating respective components of the construction machine, in particular the articulated boom, in different modes. The plurality of operating elements may thus comprise multifunctional operating elements. Changing of control layouts of the plurality of operating elements may further comprise activating or deactivating at least one operating element. Assigning an operating function to an operating element may imply in the context of the present invention that a specific actuator is assigned to, e.g. coupled to, said operating element. In other words, when actuating the operating element, the actuator assigned to that operating element may be actuated. A control layout assigned to a plurality of operating elements implies that a specific actuator is assigned to each one of the plurality of operating elements. A control layout assigned to the plurality of operating elements may correspond to standardized layout for a specific machine type, e.g. a wheel loader or an excavator.

The machine control system further comprises a single switch that is configured to communicate with the control device for selecting one of the loader control layout and the at least one excavator control layout. Using the single switch, an operator may change between the different control layouts assigned of the plurality of operating elements. The single switch for changing between the control layouts may be arranged separately, i.e. spaced apart from, the plurality of operating elements. Alternatively, the switch may be arranged on one of the plurality of operating elements and/or be integrated therein. The single switch may be a single component. The switch may comprise a loader position, in which the loader control layout is selected, and at least one excavator position, in which the at least one excavator control layout is selected. The selectability of at least one of these control layouts may depend on at least one precondition, which must be fulfilled, for allowing the construction machine to be operated in the respective operating mode. In case that such a precondition is not fulfilled, actuation of the switch may be blocked. An example of such a precondition may be a locking or stowing of a machine part or tool. A further example may be the presence of a driver on a driver's seat.

With the present invention, a single set of operating elements may be used for different operating modes, e.g. a loader mode and an excavator mode, of the construction machine. With a single switch, the operating mode may be easily changed. This allows for a construction machine with high operational variability that is easy and comfortable to use.

According to an embodiment, the switch comprises a loader position, in which the loader control layout is selected, at least one excavator position, in which the at least one excavator control layout is selected, and a default position, in which the loader control layout and the at least one excavator control layout are not selected. The switch may thus be configured as a three-position switch. The default position may be an inactive position, in which the loader control layout and the at least one excavator control layout are deactivated. The default position may also be a forced safety position, in which the switch is locked when conditions for safe operation of the construction machine in the loader mode and/or in the at least one excavator mode are not fulfilled. Starting from the default position, the loader control layout or the at least one excavator control layout may be set by actuating the switch. The default position of the switch may allow for an operation of the construction machine in a maintenance mode, in a driving mode and/or in a tool change mode.

According to a further embodiment of the machine control system, the switch comprises a rotary knob being rotatable, in particular rotatable in opposite directions of rotation, for selecting one of the loader control layout and the at least one excavator control layout. The switch may thus be configured as a rotary switch. An initial position for switch rotations, in particular opposite switch rotations, may be the default position. The switch being configured as a rotary switch may allow for an intuitive operation. The switch may further be designed as a robust switch for rough environmental conditions on a construction site, for example comprising a dust-tight switch cover.

According to an alternative embodiment, the switch may be configured as a toggle switch. The toggle switch may also comprise a default position, in particular an intermediate position in between the loader position as a first toggle position and the at least one excavator position as a second toggle position.

According to a further embodiment of the machine control system, operation of the switch for selecting one of the loader control layout and the at least one excavator control layout is at least partly blockable depending on a predefined position of an articulated boom of the construction machine, in particular on a locking position of an arm of the articulated boom. The arm may be a proximal arm of the articulated boom that is pivotably mounted on the machine frame. Selecting the loader control layout may only be allowed if such a proximal arm of the articulated boom is interlocked with the machine frame. In other words, selecting the loader control layout may be blocked if the proximal arm of the articulated boom is unlocked. The switch may be blocked in the default position if the proximal arm of the articulated boom is unlocked.

According to a further embodiment of the machine control system, operation of the switch for selecting one of the loader control layout and the at least one excavator control layout is blockable depending on a position of a tool of the construction machine. The position of the tool may depend on a position of a tool storage device of the construction machine carrying the tool. The tool storage device may be pivotably mounted to the machine frame. Selecting the loader control layout or the at least one excavator control layout may only be allowed if the tool storage device of the construction machine is in a stowed position. In other words, selecting the loader control layout or the at least one excavator control layout may be blocked if the tool storage device is in an unstowed position. The switch may further be blocked in the default position if the tool storage device is in the unstowed position. Hence, maloperations damaging such a tool storage device can be avoided in an advantageous manner.

The switch may be blocked in the default position such that a selection of neither the loader control layout nor the at least one excavator control layout is allowed. The switch may also be blocked in the position of the loader control layout such that a selection of the at least one excavator control layout, or vice versa, is not allowed. The control device may be configured to block the switch in a particular position. In the blocked position of the switch, a mode of operation may not be selectable or changeable, as at least one of the pre-conditions described herein is not fulfilled and/or an engine of the construction machine is not at idle. The previously selected control layout may remain selected or the switch may rest in the default position. Hence, maloperations of the construction machine can be avoided in an advantageous manner by the control device.

According to a further embodiment of the machine control system, the machine control system further comprises at least one further switch for controlling the position of a tool of the construction machine, wherein the at least one further switch may be configured to move and/or lock a tool storage device for storing the tool of the construction machine. By actuating the further switch, the tool storage device may be pivoted outwards to an unstowed position and inwards to a stowed position of the tool storage device. A tool change may be carried out in the unstowed position of the tool storage. According to this embodiment, the blockage state of the switch for selecting the control layout may depend on a switch position of the at least one further switch.

According to a further embodiment of the machine control system, the machine control system further comprises an alarm device for emitting an alarm, in particular a visual and/or an audible alarm, if the switch is blocked. The alarm device may emit an alarm, if the selection of a control layout is not allowed, e.g. if one of the pre-conditions described herein is not fulfilled. The alarm device may comprise a lamp having a continuous light if an allowed control layout is selected, and/or having a flashing light if a control layout is not selectable. The switch may then be forced into the default position and the alarm lamp may additionally flash, thereby indicating an alarm status. The alarm device may comprise a speaker, emitting a warning sound if a control layout is not selectable. This allows for an avoidance of maloperations and/or a speed-up of troubleshooting.

According to a further embodiment, the switch may comprise indicators indicating a loader position and at least one excavator position of the switch. The switch may further comprise a default indicator indicating a default position of the switch. The indicator for the loader position may comprise a symbol showing a loader mode, the indicator for the excavator position may comprise a symbol showing an excavator mode, and the indicator for the default position may comprise a symbol showing manual actuating directions of the switch for selecting one of the loader mode and the at least one excavator mode. A selected operation mode may be indicated by an illuminated indicator. In case a mode is blocked, said indicator may flash, for example with a frequency of one Hz.

According to a further embodiment of the machine control system, the plurality of operating elements comprises at least two hand levers for operating the construction machine in the loader mode and in the at least one excavator mode. At least one of these hand levers may be a joystick. The hand levers may be movable in a longitudinal moving direction and/or in a transversal moving direction. The at least two hand levers may be assigned with operating functions directed to a pivoting movement of the articulated boom, a movement of a tool mounted to the articulated boom, a rotation of the machine frame relative to the chassis and/or a driving of the construction machine. The pivoting movement of the articulated boom may comprise a pivoting movement of a single arm of a three-armed articulated boom, for example a proximal arm, an intermediate arm or a distal arm. A first operating function may be allocated to the longitudinal movement direction and a second operating function to the transversal movement direction of an operating element. The assignments of operating functions to the different operating elements may be changed, for example partly or entirely, by actuation of the one switch according to the present invention. According to a further embodiment of the machine control system, the machine control system further comprises an operator seat, wherein the at least two hand levers for operating the construction machine in the loader mode and in the at least one excavator mode are arranged at the operator seat to allow actuation thereof by an operator sitting on the seat in the intended fashion. The operator seat may be arranged within an operator's cabin of the construction machine. The switch and the at least one further switch may be arranged at the operator seat.

According to a further embodiment of the machine control system, the plurality of operating elements comprises at least one foot lever for operating the construction machine in the loader mode and in the at least one excavator mode. The at least one foot lever may be a pedal. The at least one foot lever may be movable in a longitudinal movement direction. A pivoting movement of the articulated boom, a movement of a tool mounted to the articulated boom and/or a driving of the construction machine may be assigned to the foot lever in one or in all selectable control layouts. The pivoting movement of the articulated boom may comprise a pivoting movement of a single arm of a three-armed articulated boom, for example the proximal arm, the intermediate arm or the distal arm. The at least one foot lever may be moved bidirectionally back and forth in the longitudinal moving direction for triggering respective bidirectional movements of the described machine components. Moving a foot lever in longitudinal direction may be a tilting of the foot lever. The assignment of an operating function to the foot lever may be changed by actuation of the switch. According to an embodiment of the machine control system, at least one foot lever for operating the construction machine in the loader mode and in the at least one excavator mode is arranged at one side of an operator seat. The construction machine may be operated in the loader mode and in the at least one excavator mode by an operator in single driving and moving direction. Thus, the operator cabin may exhibit only a single food control area, e.g. a single foot lever, in front of the operator seat. The operator cabin may exhibit a single seat only, wherein said single seat may be a rigidly arranged seat, in particular a seat that cannot be rotated.

According to a further embodiment of the machine control system, besides loader and excavator function, dozer operating function may be assigned to the plurality of operating elements. The construction machine may thus be effectively operable in at least three different operation modes, i.e. a loader mode, an excavator mode and a dozer mode. According to an embodiment of the machine control system, the plurality of operating elements comprises a hand lever for operating the construction machine in a dozer mode. The hand lever may for example be activated when the at least one excavator control layout is selected. The hand lever may further be deactivated when the loader control layout is selected. According to a further embodiment of the machine control system, the control device is configured to assign two different excavator control layouts to the plurality of operating elements, wherein the excavator operating functions are different from each other and both different from the loader operating functions.

According to a further aspect of the invention, a construction machine that is configured to be operated in a loader mode and in at least one excavator mode, wherein the construction machine comprises a machine control system according to one of the embodiments described above, is provided.

### Brief description of the figures

- Fig. 1: shows a side view of a construction machine according to an embodiment of the present invention in a loader mode.
- Fig. 2: shows a side view of the construction machine of Fig. 1 in an excavator mode.
- Fig. 3: shows a side view of the construction machine of Fig. 1 in dozer mode.
- Fig. 4: shows a switch of a machine control system according to an embodiment of the present invention.
- Fig. 5: shows a switch of a machine control system according to a further embodiment of the present invention.
- Fig. 6: shows two further switches of a machine control system according to an embodiment of the present invention.
- Fig. 7: shows a machine control system according to an embodiment of the present invention in a loader control layout.
- Fig. 8: shows a machine control system according to an embodiment of the present invention in an excavator control layout.
- Fig. 9: shows ground drive element of a machine control system according to an embodiment of the present invention.
- Fig. 10: shows ground drive element of a machine control system according to an embodiment of the present invention.

### Detailed description of embodiments

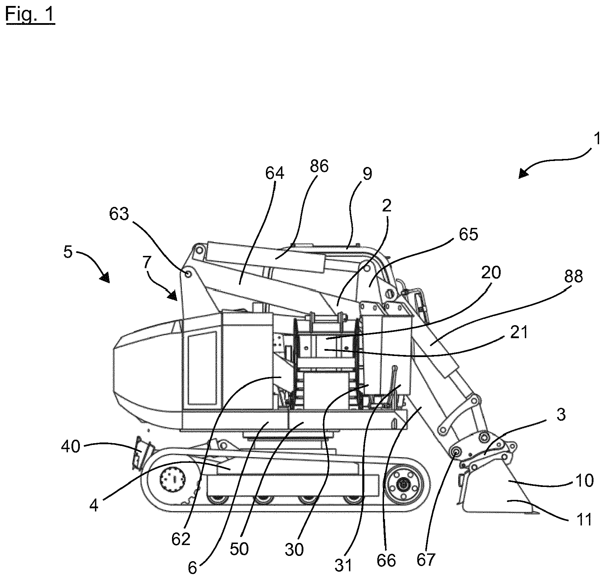

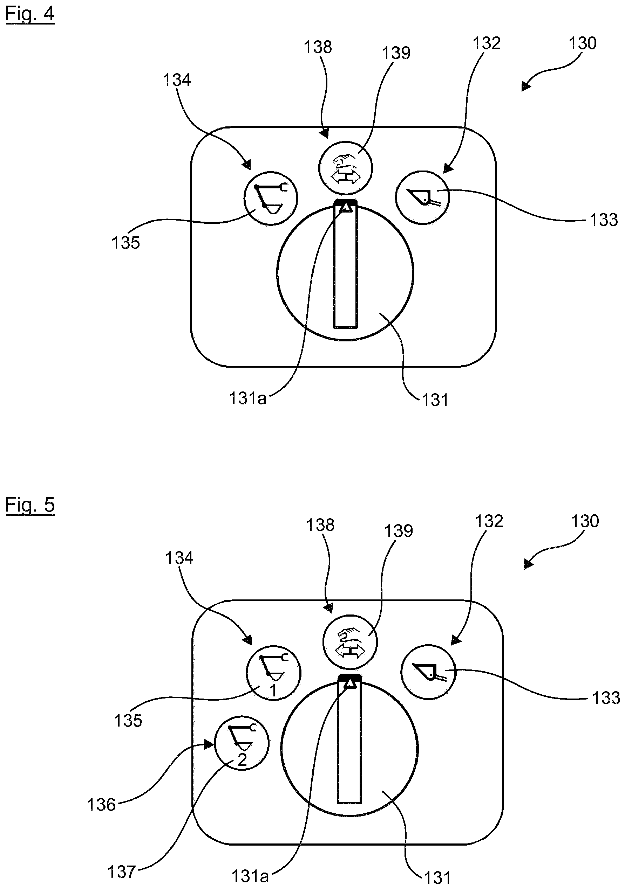

Embodiments of the present invention are subsequently described with reference to the attached Figs. 1 to 10. Figs. 1 to 3 show a construction machine 1 according to an embodiment of the present invention, wherein the construction machine 1 is shown in three different operational modes. The construction machine 1 may comprise a chassis 4, an upper structure 5 and an articulated boom 2. The chassis 4 may be a track-driven chassis 4 or a wheel-driven chassis (not shown). The upper structure 5 may be arranged on the chassis 4 in a pivotable manner to be rotatable with respect to the chassis 4. The construction machine further comprises a machine control system (not shown in Fig. 1 to 3) that is described in detail with respect to Figs. 4 to 10. The upper structure 5 may comprise a machine frame 6 as a base frame or basic framework of the upper structure 5. The upper structure 5 may further comprise a driver's cabin 9 with a driver's seat (not shown in Figs. 1 to 3). For example, the chassis 4, the upper structure 5 and/or the articulated boom 2 may be operated by an electric motor (not shown). A hydraulic pump (not shown) for operating hydraulic actuators and a swing drive (not shown) for rotating the upper structure 5 with respect to the chassis 4 may further be provided. The electric motor may drive the hydraulic pump. The driver's cabin 9 may be arranged on the machine frame 6. The upper structure 5 may further comprise a recess 7. The recess 7 may be formed above the machine frame 6 for accommodating at least part of the articulated boom 2, i.e. a proximal arm 62 of the articulated boom 2, when being folded towards or against the machine frame 6. The driver's cabin 9 may be arranged around the recess 7.

The articulated boom 2 may be arranged on the upper structure 5, wherein the articulated boom 2 may be in particular a three-armed boom 2. At one boom end, the articulated boom 2 may be pivotably attached to the machine frame 6 by means of a first articulation 61. The first articulation 61 may be a pivot joint. The first articulation 61 may be provided at a central position of the machine frame 6 in widthwise direction of the upper structure 5 and in front of the vertical axis of rotation of the upper structure 5 in lengthwise direction of the upper structure 5. At the other end of the articulated boom 2, which is not attached to the machine frame 6, a tool mount 3 may be pivotably arranged. The articulated boom 2 may comprise the proximal arm 62, an intermediate arm 64 and a distal arm 66. The proximal arm 62 may be hinged to the machine frame 6 by means of the first articulation 61, the intermediate arm 64 may be hinged to the proximal arm 62 by means of a second articulation 63 and/or the distal arm 66 may be hinged to the intermediate arm 64 by means of a third articulation 65. The articulations 61, 63, 65 may be designed as pivoting joints. The first articulation 61 may interconnect the proximal arm 62 and the upper structure 5 and the machine frame 6, respectively, the second articulation 63 may interconnect the intermediate arm 64 and the proximal arm 62 and the third articulation 65 may interconnect the distal arm 66 and the intermediate arm 64. The articulated boom 2 may further comprise a first positioning cylinder 82 for pivoting the proximal arm 62, a second positioning cylinder 84 for pivoting the intermediate arm 64, a third positioning cylinder 86 for pivoting the distal arm 66 and/or a fourth positioning cylinder 88 for pivoting the tool mount 3.

Different tools 10, 20, 30 may be provided on the construction machine 1, which are configured to be mounted to the tool mount 3 that may be pivotably attached to the distal arm 66. A fourth articulation 67 may interconnect the distal arm 66 and the tool mount 3. Tools 10, 20, 30 not mounted to the tool mount 3 may be carried by the construction machine 1 on a tool storage. A first tool 10 may be a loader bucket 11, a second tool 20 may be an excavator bucket 21 and a third tool 30 may be a hammer 31, wherein at least the loader bucket 11 and the excavator bucket 21 may be provided on the construction machine 1. The hammer 31 may be a hydraulic hammer. Alternatively, only two tools out of the different tools 10, 20, 30 may be provided on the machine.

The chassis 4 may comprise a first tool carrier 40 and the upper structure 5 may further comprise a second tool carrier 50, wherein the first tool carrier 40 and/or the second tool carrier 50 may provide the tool storage on the construction machine 1. The second tool carrier 50 may be configured as a tool changer. The first tool carrier 40 may be arranged at the rear side of the chassis 4 and may be configured to carry the first tool 10. The first tool carrier 40 may be tiltable and may be moved between an upward position and a downward position. The upward position may serve for carrying the first tool 10 and the downward position may serve for utilizing the first tool 10, e.g. the loader bucket 11, for carrying out dozer work with the construction machine 1. In other words, in the upward position, the first tool 10 is spaced from the ground, whereas it is in contact with or at least in proximity of the ground in the downward position. The second tool carrier 50 may be arranged at the front end of the upper structure 5, wherein the second tool carrier 50 may be positioned adjacent to the articulated boom 2 in widthwise direction of the upper structure 5. The articulated boom 2 may be arranged in between the driver's cabin 9 and the second tool carrier 50. The second tool carrier 50 may be accommodated in a frame recess of the machine frame 6 and may be pivoted from a stowed position to at least one pivot position. For that purpose, the second tool carrier 50 may be pivotably attached to the machine frame 6. Two tools 20, 30 may be carried on the second tool carrier 50. The tools 20, 30 may be the excavator bucket 21 and the hammer 31, both mountable to the tool mount 3.

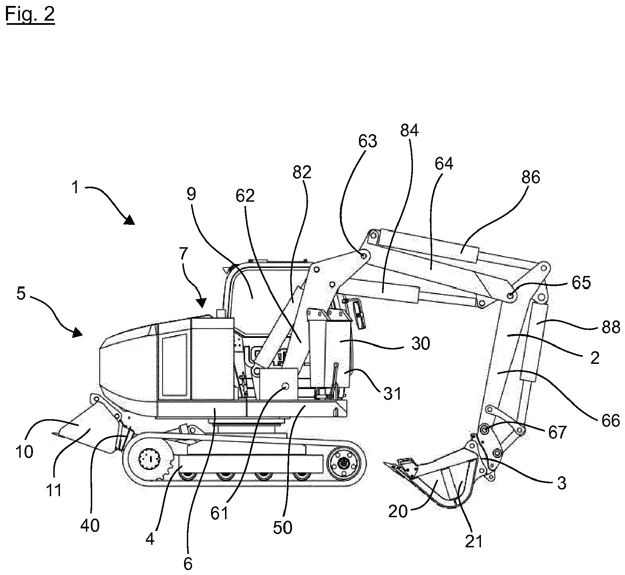

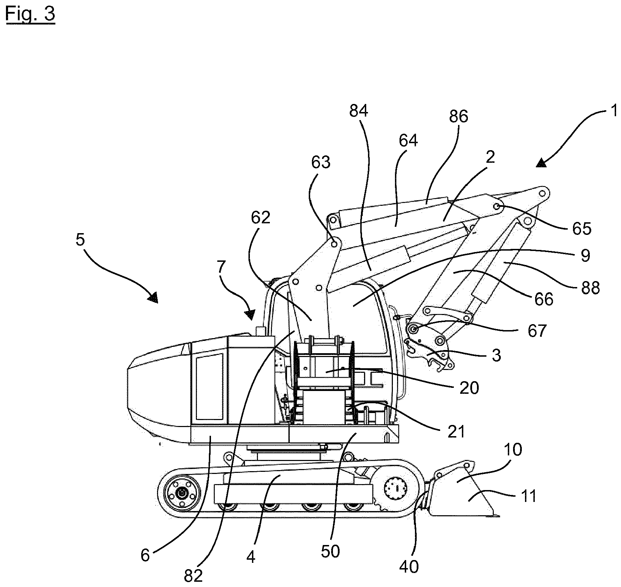

The different operational modes of the construction machine 1 are subsequently described in detail with reference to the Figs. 1 to 3. Fig. 1 shows the construction machine 1 in a loader mode as an operational mode of the construction machine 1. In this operational mode, the articulated boom 2 may be arranged in a partly locked configuration, in which the first articulation 61 may be blocked by interlocking the proximal arm 62 of the articulated boom 2 with the upper structure 5 and/or the machine frame 6 of the construction machine 1. In the loader mode, the articulated boom 2 may be de facto a two-armed boom. The loader bucket 11 may be mounted to the tool mount 3, and the excavator bucket 21 and the hammer 31 may be carried by the construction machine 1. Fig. 2 shows the construction machine 1 in an excavator mode being a further operational mode of the construction machine 1. In this operational mode, the articulated boom 2 may be arranged in an unlocked configuration such that all boom articulations 61, 63, 65, 67 are unlocked and all arms 62, 64, 66 are movable. In this excavator mode, the excavator bucket 21 may be mounted to the tool mount 3. The loader bucket 11 and the hammer 31 may be carried by the construction machine 1 by depositing them in the tool storage, i.e. the first tool carrier 40 or second tool carrier 50. Fig. 3 shows the construction machine 1 in a dozer mode as a further optional operational mode of the construction machine 1. This operational mode may be the excavator mode, wherein the articulated boom 2 may not be operated. The loader bucket 11 mounted on the first tool carrier 40 may be tilted downwards providing a dozer blade-functionality.

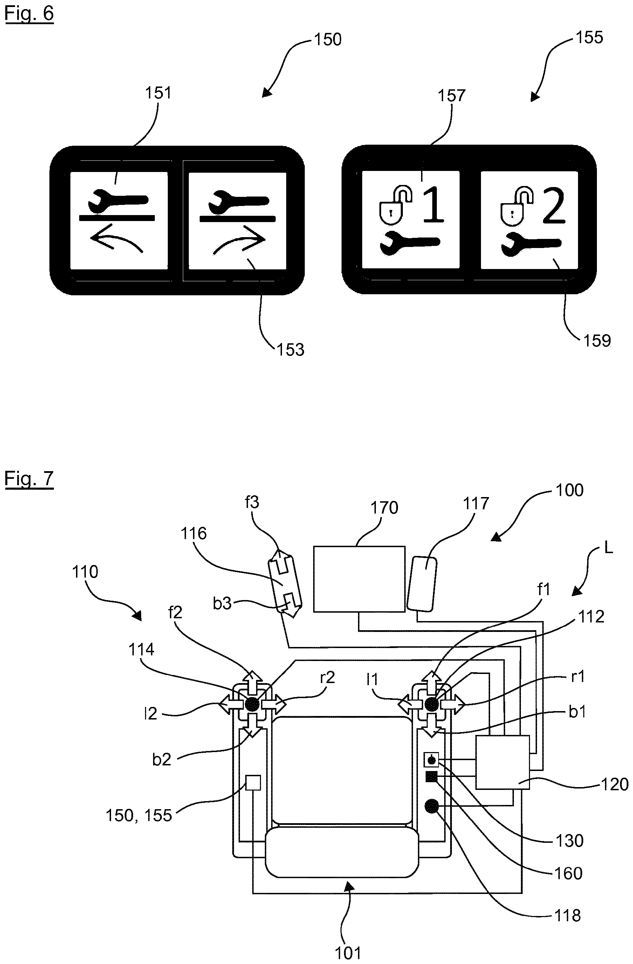

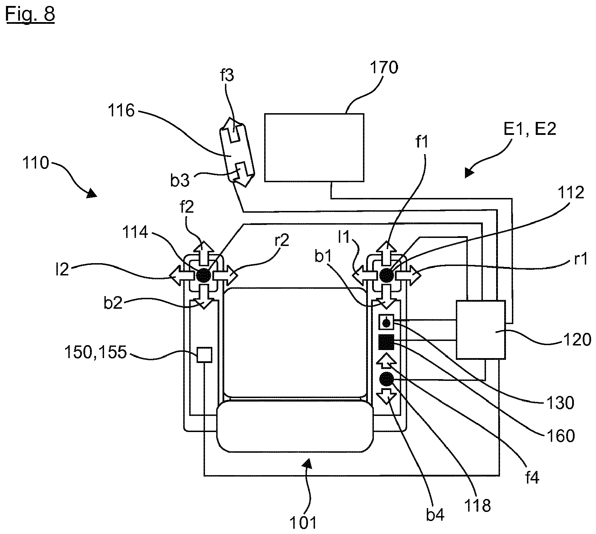

Embodiments of a machine control system 100 with a single switch 130 are further described with respect to Figs. 4 to 10. The machine control system 100 serves for operating the construction machine 1, namely the boom 2, i.e. the different arms of the boom 62, 64, 66, the swing drive between the upper structure 5 and the chassis 4, the first and the second tools 10, 20 and the ground drive for macroscopically moving the entire construction machine. Figs. 7 and 8 show a machine control system 100 for operating the construction machine 1 shown in Figs. 1 to 3 according to an embodiment of the invention. The machine control system 100 comprises a plurality of operating elements 110, a control device 120 and a single switch 130. The plurality of operating elements 110 and the single switch 130 may be arranged in an operator's cabin 9 around a driver's seat 101.

Fig. 4 shows a single switch 130 of the machine control system 100 for controlling the construction machine of Figs. 1-3 according to an embodiment of the present invention. The switch 130 may be configured as a rotary switch comprising a rotary knob 131. The rotary knob 131 may be rotated, for example to the left, to an excavator position 134 of the switch 130. The rotary knob 131 may also be rotated, for example to the right, to a loader position 132 of the switch 130. The switch 130 may further comprise a default position 138 in between the excavator position 134 and the loader position 132. The default position 138 may be an initial position prior to switching to one of the operation mode positions 132, 134. The switch 130 may further comprise position indicators 133, 135, 139 indicating the loader position 132, the excavator position 134 and the default position 138. A loader indicator 133 with a loader symbol may be arranged at the loader position 132. An excavator indicator 135 with an excavator symbol may be arranged at the excavator position 134. A default indicator 139 with a default symbol may be arranged at the default position 138. The position indicators 133, 135, 139 may be illuminated. The rotary knob may also comprise an arrow indicator 131 a selectively pointing at one of the positions 132, 134, 138.

Fig. 5 shows a switch 130 of the machine control system 100 according to a further embodiment of the present invention. The switch 130 of Fig. 5 corresponds to the switch of Fig. 4 except for the differences described below. Compared to the switch 130 shown in Fig. 4, a further excavator position 136 is provided by the switch 130 of Fig. 5. The rotary knob 131 may thus be rotated, for example to the left, to a first excavator position 134 of the switch 130, and further to a second excavator position 136 of the switch 130. The switch 130 may thus further comprise position indicators 135, 137 indicating the first excavator position 134 and the second excavator position 136. A first excavator indicator 135 with a first excavator symbol may be arranged at the first excavator position 134. A second excavator indicator 137 with a second excavator symbol may be arranged at the second excavator position 136.

As described in detail in the following, turning the rotary knob 131 of the switch 130 of Fig. 4 or Fig. 5 to the loader position 132 assigns a loader control layout L, which is shown in Fig. 7, to a plurality of operating elements of the machine. Further, turning the rotary knob 131 to an excavator position 134 (or 136) assigns an excavator control layout E1 (or E2) to the operating elements, the layout(s) E1 (and E2) being shown in Fig. 8.

Furthermore, the machine control system 100 may further be configured to control the second tool carrier 50. For that purpose, as shown in Fig. 6, the machine control system 100 may comprise two further switches 150, 155. A first further switch 150 may be a toggle switch with two switch positions 151, 153. In the first switch position 151, the second tool carrier 50 may be stowed or pivoted towards the machine frame 6. In the second switch position 153, the second tool carrier 50 may be unstowed or pivoted outwards from the machine frame 6. A second further switch 155 may also be a toggle switch with two switch positions 157, 159. In the first switch position 157, a tool on the tool carrier 50 may locked on the second tool carrier 50. In the second switch position 159, the tool on the tool carrier 50 may be unlocked on the second tool carrier 50. Alternatively, with respect to the second further switch 155, in the first switch position 157, the proximal arm 62 of the articulated boom 2 may be interlocked with the upper structure 5 and/or with the machine frame 6 of the construction machine 1. In the second switch position 159, the interlocking of the proximal arm 62 of the articulated boom 2 with the upper structure 5 and/or the machine frame 6 of the construction machine 1 may be released. The control device 120 of the machine control system 100 may be electrically connected with the respective components and/or switches and configured to perform the above-described functions.

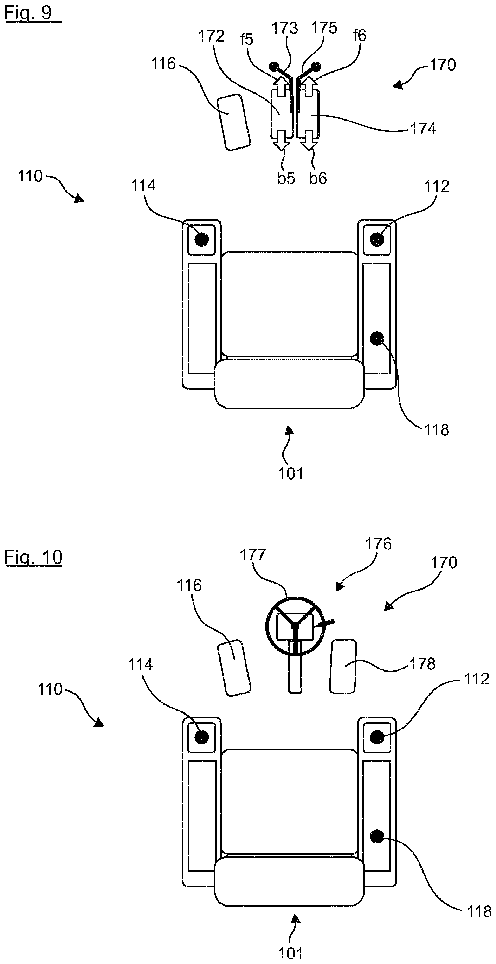

The plurality of operating elements 110 of the machine control system 100 may comprise at least two hand levers, a first hand lever 112 and a second hand lever 114. Optionally, the plurality of operating elements 110 may further comprise an additional hand lever 118. The first hand lever 112 may be arranged at a right-hand side of the driver's seat 101, wherein the first hand lever 112 may be actuated with the operator's right hand. The first hand lever 112 may be arranged at a front portion of the right-hand side, for example on a front portion of a right armrest of the driver's seat 101. The second hand lever 114 may be arranged at a left-hand side of the driver's seat 101, wherein the second hand lever 114 may be actuated with the operator's left hand. The second hand lever 114 may be arranged at a front portion of the left-hand side, for example on a front portion of a left armrest of the driver's seat 101. The additional hand lever 118 may be arranged at the right-hand side of the driver's seat 101, wherein the additional hand lever 118 may be actuated with the operator's right hand. The additional hand lever 118 may be arranged at a rear portion of the right-hand side, for example on a rear portion of the right armrest of the driver's seat 101. The plurality of operating elements 110 may further comprise a foot lever 116. Additionally, the plurality of operating elements 110 may further comprise ground drive operating elements 170 that are further described below with reference to Figs. 9 and 10. Optionally, the plurality of operating elements 110 may further comprise an auxiliary foot lever 117 that may be additionally or alternatively assigned with any one of the operating functions described herein.

A switch 130 of the machine control system 100 as described in connection with Fig. 4 or Fig. 5 may be arranged at the right-hand side (as exemplary shown in Fig. 7) or at the left-hand side of the driver's seat 101. The control device 120 may also be arranged at the right-hand side or at the left-hand side of the driver's seat 101. Alternatively, the control device 120 may be arranged spaced apart from the driver' seat 101 (as exemplary shown in Fig. 7) on the construction machine 1 and/or spaced apart from the construction machine 1.

The control device 120 may be connected with the plurality of operating elements in a wire-based manner or in a wireless manner. The control device 120 may be connected with the first hand lever 112, the second hand lever 114, the foot lever 116 and the switch 130. The control device 120 may be further connected with the additional hand lever 118.

In Fig. 7, a loader control layout L of the plurality of operating elements 110 is shown. The control layout L comprises assignments of the plurality of operating elements 110 with loader operating functions. The control device 120 may be configured to only allow the machine control system 100 to be changed to a loader control layout L if certain preconditions are fulfilled. A first precondition that must be fulfilled may be that the second tool carrier 50 is stowed in the machine frame 6 as shown in Fig. 1. A second precondition may be that the proximal arm 62 of the articulated boom 2 of the construction machine 1 is interlocked with the upper structure 5 and/or the machine frame 6 of the construction machine 1 as further shown in Fig. 1. If these preconditions are fulfilled, the control device 120 may release the knob 131 to allow it to be turned to the loader position 132 shown in Fig. 4 or 5. For example, for verifying whether the preconditions are fulfilled, the control device 120 may be configured to verify whether two further switches 150, 155 shown in Fig. 6 may be respectively actuated. The two further switches 150, 155 may also be connected with the control device 120 and may be arranged at the left-hand side (as exemplary shown in Fig. 7) or at the right-hand side of the driver's seat 101. In case that at least one of the preconditions for the loader control layout L is not fulfilled, an alarm device 160 may emit a visual and/or an audible alarm. The alarm device 160 may comprise a warning lamp and/or a loudspeaker (both not shown in Fig. 7). The alarm device 160 may be connected with the control device 120 and may be arranged at the right-hand side (as exemplary shown in Fig. 7) or at the left-hand side of the driver's seat 101. The alarm device 160 may also be integrated in or combined with the switch 130.

In case that the preconditions for the loader control layout L are fulfilled and the switch 130 is turned to its loader position 132, the plurality of operating elements 110 may be assigned with loader operating functions as follows: In the loader control layout L, the first hand lever 112 may be assigned in its longitudinal moving direction with operating functions for moving the intermediate arm 64 of the articulated boom 2. A forward movement f1 of the first hand lever 112 may cause a downward pivoting of the intermediate arm 64 of the articulated boom 2. A backward movement b1 of the first hand lever 112 may cause an upward pivoting of the intermediate arm 64. The first hand lever 112 may be further assigned in its lateral moving direction with operating functions for moving the loader bucket 11 mounted on the tool mount 3 of the articulated boom 2. A left movement l1 of the first hand lever 112 may cause a upward tilting of the loader bucket 11. A right movement r1 of the first hand lever 112 may cause a downward tilting of the loader bucket 11. Further, the second hand lever 114 may be assigned in its longitudinal moving direction with operating functions for driving the construction machine. A forward movement f2 of the second hand lever 114 may cause a forward driving of the construction machine 1. A backward movement b2 of the second hand lever 114 may cause a rearward driving of the construction machine 1. The second hand lever 114 may be further assigned in its lateral moving direction with operating functions for steering the construction machine 1. A left movement l2 of the second hand lever 114 may cause a left steering of the construction machine 1. A right movement r2 of the second hand lever 114 may cause a right steering of the construction machine 1. The additional hand lever 118 may not be assigned with any operating functions in the loader control layout L. For example, the additional hand lever 118 may be deactivated by the control device 120. In addition, the foot lever 116 may be assigned in its longitudinal moving direction with operating functions for moving the distal arm 66 of the articulated boom 2. A pushing f3 of the foot lever 116 may cause an outward pivoting of the distal arm 66 of the articulated boom 2. A releasing b3 of the foot lever 116 may cause an inward pivoting of the distal arm 66 of the articulated boom 2.

In Fig. 8, two alternative excavator control layouts E1, E2 of the plurality of operating elements 110 are shown. In case that the machine control system 100 is configured with a switch 130 according to Fig. 4, one of the excavator control layouts E1, E2 may be selectable in the excavator position 134. In case that the machine control system 100 is configured with a switch 130 according to Fig. 5, one of the excavator control layouts E1, E2 may be selectable in the first excavator position 134 and the other one of the excavator control layouts E1, E2 may be selectable in the second excavator position 136. The excavator control layout E1 may be one out of two excavator control layouts, i.e. a first excavator control layout E1. The excavator control layout E1 comprises assignments of the plurality of operating elements 110 with excavator operating functions, said excavator operating functions being at least partly different from the loader operating functions assigned to the different operating elements 110 in Fig. 7. The further excavator control layout E2 may be another one out of two excavator control layouts, i.e. a second excavator control layout E2. The control layout E2 comprises assignments of the plurality of operating elements 110 with excavator operating functions, said excavator operating functions being at least partly different from the loader operating functions assigned to the different operating elements 110 in Fig. 7.

The control device 120 may be configured to only allow the machine control system 100 to be changed to an excavator control layout E1, E2 if certain preconditions are fulfilled. A precondition may be that the second tool carrier 50 is stowed in the machine frame 6 as shown in Fig. 2. If the precondition is fulfilled, the control device 120 may release the knob 131 to allow it to be turned to the excavator position 134 shown in Fig. 4 or 5. For example, for verifying whether the precondition is fulfilled, the control device 120 may be configured to verify whether a switch 150, 155 shown in Fig. 6 may be respectively actuated. In case that the precondition for the excavator control layout E1 is not fulfilled, the alarm device 160 as described with respect to Fig. 7 may be operated by the control device 120.

In case that the precondition for the excavator control layout E1 is fulfilled and the switch 130 is moved to its excavator position 134, the plurality of operating elements 110 may be assigned with excavator operating functions as follows: In the excavator control layout E1, the first hand lever 112 may be assigned in its longitudinal moving direction with operating functions for moving the proximal arm 62 of the articulated boom 2. A forward movement f1 of the first hand lever 112 may cause an outward pivoting of the proximal arm 62 of the articulated boom 2. A backward movement b1 of the first hand lever 112 may cause an inward pivoting of the proximal arm 62. The first hand lever 112 may be further assigned in its lateral moving direction with operating functions for moving the excavator bucket 21 mounted on the tool mount 3 of the articulated boom 2. A left movement l1 of the first hand lever 112 may cause a inward tilting of the excavator bucket 21. A right movement r1 of the first hand lever 112 may cause an outward tilting of the excavator bucket 21. Further, the second hand lever 114 may be assigned in its longitudinal moving direction with operating functions for moving the distal arm 66 of the articulated boom 2. A forward movement f2 of the second hand lever 114 may cause an outward pivoting of the distal arm 66 of the articulated boom 2. A backward movement b2 of the second hand lever 114 may cause an inward pivoting of the distal arm 66 of the articulated boom 2. The second hand lever 114 may be further assigned in its lateral moving direction with operating functions for rotating the upper structure 5 together with the articulated boom 2 with respect to the chassis 4 of the construction machine 1. A left movement l2 of the second hand lever 114 may cause a left rotation of the upper structure 5. A right movement r2 of the second hand lever 114 may cause a right rotation of the upper structure 5. Further, the additional hand lever 118 may be assigned in its longitudinal moving direction with operating functions for moving the loader bucket 11 mounted to the first tool carrier 40 as shown in Fig. 3. A forward movement f4 of the additional hand lever 118 may cause a downward tilting of the loader bucket 11. A backward movement b4 of the additional hand lever 118 may cause an upward tilting of the loader bucket 11. The construction machine 1 may be operated in a dozer mode when tilting the loader bucket 11 accordingly. Further, in the first excavator control layout E1, the foot lever 116 may be assigned with operating functions for moving the intermediate arm 64 of the articulated boom 2. A pushing f3 of the foot lever 116 may cause an outward pivoting of the intermediate arm 64 of the articulated boom 2. A releasing b3 of the foot lever 116 may cause an inward pivoting of the intermediate arm 64 of the articulated boom 2. In the further excavator control layout E2, the assignments of excavator control functions to the respective operating elements 110 corresponds to the assignments in the control layout E1 with the difference that the excavator functions assigned to the longitudinal movements of the first and second hand lever 112, 114 are interchanged in the control layout E2 compared to the control layout E1.

In Figs. 9 and 10, the ground drive operating elements 170 of Figs. 7 and 8 are shown in detail. The plurality of operating elements 110 may comprise these ground drive operating elements 170 for driving the construction machine 1. The assignments of operating functions to the ground drive operating elements 170 may be combined with all previous described operating control layouts.

In Fig. 9, ground drive operating elements 170 for a track-driven construction machine 1 as shown in Fig. 1 to 3 are shown. Two additional foot levers 172, 174 are arranged next to the foot lever 116. A left foot lever 172 may be assigned with operating functions for operating a left track of the construction machine 1. A forward movement f5 of the foot lever 172 may cause a forward driving of the left track. A backward movement b5 of the foot lever 172 may cause a rearward driving of the left track. A right foot lever 174 may be assigned with operating functions for operating a right track of the construction machine 1. A forward movement f6 of the foot lever 174 may cause a forward driving of the right track. A backward movement b6 of the foot lever 174 may cause a rearward driving of the right track. The foot levers 172, 174 may further be configured as combined hand-foot-levers. The foot levers 172, 174 may comprise hand levers 173, 175 being each mounted to the foot levers 172, 174 for moving them in their longitudinal moving direction alternatively by hand.

In Fig. 10, alternative ground drive operating elements 170 for a wheel-driven construction machine are shown. A steering column 176 comprising a steering wheel 177 is arranged in front of the driver's seat 101 for steering the construction machine 1. A further foot lever 178 is arranged next to the steering column 176 having an operating function as a service brake.

## Claims

1. Machine control system (100) for operating a construction machine (1), comprising
a plurality of operating elements (110) for operating the construction machine (1) in a loader mode and in at least one excavator mode;
a control device (120) being configured to selectively set a loader control layout (L) or at least one excavator control layout (E1; E2), wherein the loader control layout (L) comprises an assignment of the plurality of operating elements (110) with loader operating functions and the at least one excavator control layout (E1, E2) comprises an assignment of the plurality of operating elements (110) with excavator operating functions that is different to the assignment of the plurality of operating elements (110) with the loader operating functions; and
a single switch (130) being configured to communicate with the control device (120) for selecting one of the loader control layout (L) and the at least one excavator control layout (E1; E2).

2. Machine control system (100) according to claim 1, wherein
the switch (130) comprises a loader position (132), in which the loader control layout (L) is selected, at least one excavator position (134; 136), in which the at least one excavator control layout (E1; E2) is selected, and a default position (138), in which the loader control layout (L) and the at least one excavator control layout (E1; E2) are not selected.

3. Machine control system (100) according to claim 1 or 2, wherein
the switch (130) comprises a rotary knob (131) being rotatable, in particular rotatable in opposite directions of rotation, for selecting one of the loader control layout (L) and the at least one excavator control layout (E1; E2).

4. Machine control system (100) according to one of the preceding claims, wherein operation of the switch (130) for selecting one of the loader control layout (L) and the at least one excavator control layout (E1, E2) is at least partly blockable depending on a predefined position of an articulated boom (2) of the construction machine (1), in particular on a locking position of an arm of the articulated boom (2).

5. Machine control system (100) according to one of the preceding claims, wherein operation of the switch (130) for selecting one of the loader control layout (L) and the at least one excavator control layout (E1; E2) is blockable depending on a state of a tool of the construction machine (1).

6. Machine control system (100) according to claim 5, comprising
at least one further switch (150) for controlling the position of the tool of the construction machine (1), wherein the at least one further switch (150) is configured for moving and/or locking a tool storage device of the construction machine (1) storing the tool, wherein a blockage of the switch (130) depends on a switch position of the at least one further switch (150).

7. Machine control system (100) according to one of claims 4 to 6, comprising
an alarm device (160) for emitting an alarm, in particular a visual and/or an audible alarm, if the operation of the switch (130) is blocked.

8. Machine control system (100) according to one of the preceding claims,
wherein the plurality of operating elements (110) comprises at least two hand levers (112, 114) for operating the construction machine (1) in the loader mode and in the at least one excavator mode.

9. Machine control system (100) according to one of the preceding claims,
further comprising an operator seat (101),
wherein the at least two hand levers (112, 114) for operating the construction machine (1) in the loader mode and in the at least one excavator mode are arranged next to the operator seat (101) for allowing an operator sitting on the seat (101) to actuate them.

10. Machine control system (100) according to one of the preceding claims,
wherein the plurality of operating elements (110) comprises at least one foot lever (116) for operating the construction machine (1) in the loader mode and in the at least one excavator mode.

11. Machine control system (100) according to one of the preceding claims,
wherein at least one foot lever for operating the construction machine (1) in the loader mode and in the at least one excavator mode is arranged at the operator seat (101) for allowing an operator sitting on the seat (101) to actuate it.

12. Machine control system (100) according to one of the preceding claims,
wherein the assignment of the plurality of operating elements (110) with excavator operating functions also allows for an operation of the construction machine in a dozer mode.

13. Machine control system (100) according to one of the preceding claims, wherein
the plurality of operating elements (110) comprises a hand lever (118) for operating the construction machine (1) in a dozer mode.

14. Machine control system (100) according to one of the preceding claims,
the control device (120) being configured to selectively set a loader control layout (L) or one of two excavator control layouts (E1, E2) of the plurality of operating elements (110), wherein the loader control layout (L) comprises the assignment of the plurality of operating elements (110) with the loader operating functions and the two excavator control layouts (E1, E2) each comprise an assignment of the plurality of operating elements (110) with respective excavator operating functions that are different from each other and that are both different to the assignment of the plurality of operating elements (110) with the loader operating functions.

15. Construction machine (1) being configured to be operated in a loader mode and in at least one excavator mode, wherein the construction machine (1) comprises a machine control system (100) according to one of the preceding claims.
